# EUROPEAN PATENT APPLICATION

(11) **EP 4 841 178 A1**
(43) Date of publication of application: **18.11.2026**
(21) Application number: 25176302.5
(22) Date of filing: 14.05.2025
(51) Int. Cl.: F24H 1/00, H05B 3/26, B60H 1/22, F24H 1/10, H05B 3/50

(54) **FLOW HEATER**

(71) Applicant: Borgwarner Inc., Auburn Hills, Michigan 48326 (US)
(72) Inventor: Rechtsteiner, Philipp, 88437 Maselheim (DE); Folgar, Miguel, 36618 Vilagarcia de Arousa (ES); Gonzalez, Iago, 36315 Vigo (ES)
(74) Representative: Twelmeier Mommer & Partner

(57) **Abstract**

Disclosed is a flow heater, comprising a housing (1) comprising a base part and a cover part, a channel for liquid to be heated, said channel extending from an inlet (2) to an outlet (3), a heating plate (9), and fins (8) arranged in the channel, wherein the fins (8) are made of an aluminum-based alloy, wherein the heating plate (9) comprises a substrate (10) made of steel, and, on a side facing away from the fins (8), a conductive track (11) forming a heating resistor, and a dielectric layer (12), which is arranged between the substrate (10) and the resistive track (11) and electrically insulates the conductive track (11) from the substrate (10), and wherein the fins (8) are brazed to the substrate (10).

## Description

The invention refers to a flow heater. A flow heater according to the preamble of claim 1 is disclosed in US 2022/0082297 A1.

Such flow heaters are used for heating liquids, especially aqueous solutions, in vehicles. The combination of a heating plate comprising a substrate made of steel with fins made of an aluminum-based alloy allows cost-efficient manufacturing of a robust and durable heater.

An object of the present invention is to show how the lifetime of such flow heaters can be extended or the risk of failure reduced.

This object is solved with a flow heater according to claim 1. Advantageous refinements of the invention are the matter of dependent claims.

In a flow heater according to the present invention, a side of the substrate that faces the fins is covered with a cover layer made of an aluminum-based alloy. This cover layer prevents contact of liquid to be heated with the substrate of the heating plate. In addition, the cover layer facilitates connecting the fins to the heating plate by a substance-to-substance bond. In a flow heater according to the present invention, liquid to be heated passes through the channel and contacts the fins as well as the cover layer, but not the substrate. As both the fins and the cover layer are made of aluminum-based alloy, any electrochemical potential between the fins and the cover layer is small. Electrical corrosion is therefore also small and usually negligible. As electrical corrosion is reduced, the lifetime of the flow heater is increased.

In an advantageous refinement of the invention, an intermediate layer is arranged between the cover layer and the substrate. The intermediate layer may be made of an aluminum-based alloy that has a lower aluminum content than the cover layer. For example, the cover layer may comprise 95% aluminum by weight or more, while the intermediate layer comprises 85% wt.-% aluminum to 91% wt.-% aluminum. Moreover, the intermediate layer may be an aluminum-silicon alloy, e.g. contain 5 wt.-% to 12 wt.-% silicon, especially 8 wt.-% to 12 wt.-% of silicon. Preferably, the silicon content of the material of the cover layer is below 3 wt.-%.The abbreviation wt.-% is used for "weight-%".

In a further refinement of the invention, the fins are covered with a metallic layer based on aluminum on a side facing the substrate. This layer can further improve solderability of the fins to the heating plate. The material of the layer covering the fins is made of a material different from the material of the fins. The metallic layer covering the fins may be made of the same material as the intermediate layer that is arranged between the substrate and the cover layer. Then the metallic layer, like the intermediate layer, may be used as a brazing layer to create a bond.

In a further refinement of the invention, the fins (without the metallic layer) and/or the cover layer may contain up to 0.4 wt.-% titanium, e.g. 0.07 to 0.3 wt.-% titanium. Additionally or alternatively, the fins (without the metallic layer) and the cover layer may also contain copper, e.g. 1 wt.-% to 2 wt.-%, and/or copper, e.g. 0.2 wt.-% to 0.6 wt.-%.

The material of the fins (without the metallic layer covering them) may be a different material than the cover layer of the substrate, but using the same material for the fins and for covering the substrate simplifies manufacturing and minimizes electrochemical potentials.

In a further refinement of the invention, the substrate of the heating plate is made of stainless steel, e.g. ferritic stainless steel. For example, the substrate may be made of stainless steels with a chromium content of 12 wt.-% or more. Steels with a chromium content of 15 wt.-% to 19 wt.-% are well suited, especially ferritic steels with a chromium content of 16 wt.-% to 18 wt.-%.

The above-mentioned aspects of embodiments of the invention will become more apparent and will be better understood by reference to the following description of an embodiment taken in conjunction with the accompanying drawings, wherein
Fig. 1 shows a flow heater;
Fig. 2 shows a cross-sectional view of the flow heater of fig. 1; and
Fig. 3 shows a schematic diagram of a heating plate with fins.

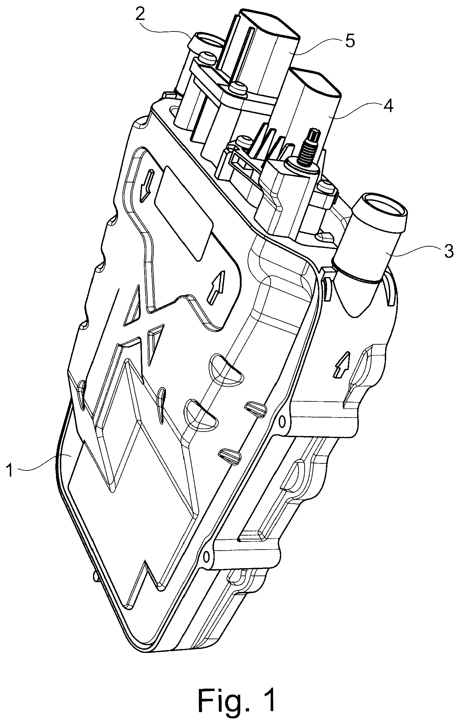

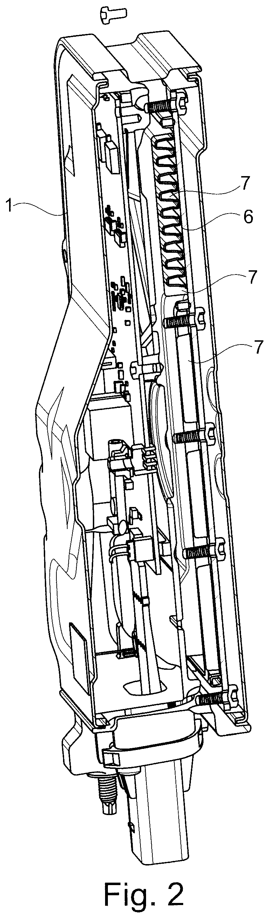

The flow heater shown in Figures 1 and 2 has a housing comprising a base part and a cover. The housing, e.g. the base part of the housing, is provided with an inlet 2 and an outlet 3 as well as electrical connectors 4, 5. A channel for liquid to be heated extends in the housing from the inlet 2 to the outlet 3.

The channel runs along a heating plate 6. Fins 8 are fixed to the heating plate 6 and arranged in the channel. The heating plate 6 comprises a substrate 10 made of steel, e.g. EN-10088 1.4016-X6Cr17 or any other stainless steel. On a dry side, i.e. a side facing away from the fins 8, the substrate 10 carries a conductive track 11 forming a heating resistor, and a dielectric layer 12, which is arranged between the substrate 10 and the conductive track 11 and electrically insulates the conductive track 11 from the substrate 10. On an opposite side, i.e. a side facing the fins 8, the substrate 10 is covered with a cover layer 13 made of an alloy that is based on aluminum. The cover layer 13 prevents liquid to be heated from contacting the substrate 10 and also connects the heating plate 6 to the fins 8. Between the cover layer 13 and the substrate is an intermediate layer 15. The thickness of intermediate layer 15 is much less than the thickness of the cover layer 13. In order to create a good bond to the cover layer 13 and the substrate 10 the intermediate layer 15 should have a thickness of at least 20 µm, although thinner intermediate layers 15 may suffice. A thickness of the intermediate layer 15 of more than 100 µm usually has no advantages. Good results can be achieved with intermediate layers 15 with a thickness of 25 µm to 50 µm. The cover layer 13 is usually thicker than the intermediate layer 15. For example, the cover layer 13 may have a thickness of 0.3 mm to 0.5 mm.

The fins 8 are made of an aluminum-based alloy and covered with a metallic layer 14. The metallic layer 14 covering the fins 8 is made of an aluminum-based alloy different from the material of the fins 8. In the embodiment shown, the metallic layer 14 covers both sides of the fins 8, but in other embodiments the metallic layer 14 may cover only the side facing the substrate 10 to facilitate brazing.

The fins 8 are made of an aluminum-based alloy chosen for its mechanical properties to facilitate working, e.g. working a flat sheet into fins. The fins 8 may, e.g., comprise 95 wt.-% aluminum by weight or more, for example 97 wt.-% or more. The properties of the fins 8 or the workability of the alloy they are made of may be improved by additions of manganese, e.g. 1 wt.-% to 2 wt.-%, and/or copper, e.g. 0.2 wt.-% to 0.6 wt.-%, and/or titanium, e.g. 0.08 wt.-% to 0.25 wt.-% titanium.

The cover layer 13 covering the substrate 10 has two functions, namely reducing galvanic corrosion and facilitating a connection of the fins 8 to the heating plate 6. Fins 8 can be brazed more easily to the cover layer 13 than to the steel substrate 10. The fins 8 may be made of the same material as the cover layer 13. In order to reduce electro-chemical or galvanic corrosion, the material of the cover layer 13 should be similar to the material of the fins 8 and any metallic layers covering the fins 8, i.e. the electro-chemical potentials of the alloys involved should be close to each other. The metallic layer 14 as well as the intermediate layer 15 can be seen as a brazing layer creating a bond between fins 8 and cover layer 13 or cover layer 13 and substrate 10, respectively.

In view of these considerations, good results can be achieved when the material of the intermediate layer 15 contains at least 85% wt.-% aluminum, for example 87% wt.-% to 91% wt.-% aluminum. The material of the intermediate layer 15 may also comprise up to 15 wt.-% silicon, for example 8 wt.-% to 12wt.-% silicon.

Metallic layer 15 covering the fins 8 has the function of facilitating brazing of the heating plate 6 to the fins 8. Metallic layer 14 may be made of the same material as intermediate layer 15. The thickness of the metallic layer 14 is much less than the thickness of the fins 8 without metallic layer 14, e.g. less than 10%. The metallic layer 14 should usually have a thickness of at least 20 µm although thinner layers 14 may suffice. A thickness of the metallic layer of more than 100 µm usually has no advantages. Good results can be achieved with metallic layers 14 of 25 µm to 50 µm.

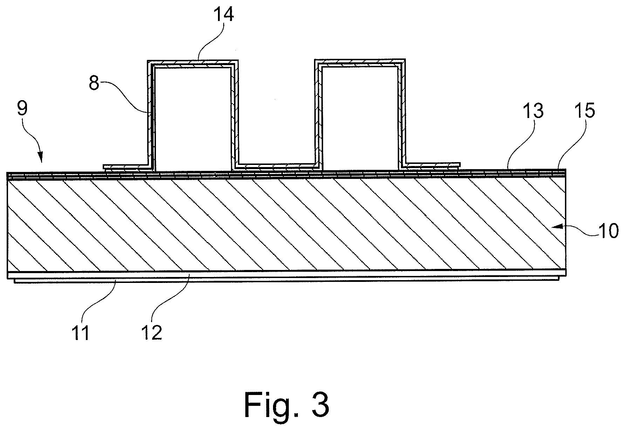

As shown in Fig. 3, the fins 8 may have a generally rectangular cross-section. Such a shape can improve transfer of heat form the heating plate to liquid surrounding the fins 8.

The metallic layer 14 covering the fins 8 may be applied by roll plating to sheet metal before it is corrugated to form fins. The cover layer 13 and the intermediate layer 15 may be connected by roll plating and then brazed to the substrate 10, for example.

### List of reference signs

- 1: housing
- 2: inlet
- 3: outlet
- 4: electrical connector
- 5: electrical connector
- 6: heating plate
- 8: fins
- 10: substrate
- 11: resistive track
- 12: dielectric layer
- 13: cover layer
- 14: metallic layer
- 15: intermediate layer

## Claims

1. Flow heater comprising
a housing (1) comprising a base part and a cover part,
a channel for liquid to be heated, said channel extending from an inlet (2) to an outlet (3),
a heating plate (9), and
fins (8) arranged in the channel,
wherein the fins (8) are made of an aluminum-based alloy,
wherein the heating plate (9) comprises a substrate (10) made of steel, and, on a side facing away from the fins (8), a conductive track (11) forming a heating resistor, and a dielectric layer (12), which is arranged between the substrate (10) and the resistive track (11) and electrically insulates the conductive track (11) from the substrate (10), and
wherein the fins (8) are brazed to the substrate (10),
**characterized in that**
the substrate (10) is covered on a side facing the fins (8) with a cover layer (13) made of an alloy that is based on aluminum and prevents contact of liquid to be heated with the substrate (10).

2. Flow heater according to claim 1, **characterized in that** between the cover layer (13) and the substrate (10) is an intermediate layer (15).

3. Flow heater according to claim 2, **characterized in that** the intermediate layer (15) is made of an aluminum-based alloy that has a lower aluminum content than the cover layer (13).

4. Flow heater according to any one of the preceding claims, **characterized in that** the intermediate layer (15) comprises at least 85% wt.-% aluminum, preferably 87% wt.-% to 91% wt.-% aluminum.

5. Flow heater according to any one of claims 2 to 4, **characterized in that** the intermediate layer (15) comprises 8% to 12% silicon by weight.

6. Flow heater according to any one of the preceding claims, **characterized in that** the cover layer (13) and/or the fins (8) comprise at least 95% aluminum by weight, preferably at least 97% by weight.

7. Flow heater according to any one of the preceding claims, **characterized in that** the cover layer (13) and/or the fins (8) comprise 1% to 2% manganese by weight.

8. Flow heater according to any one of the preceding claims, **characterized in that** the cover layer and/or the fins (8) comprise 0.2 wt.-% to 0.6 wt.-% copper.

9. Flow heater according to any one of the proceeding claims, **characterized in that** the fins (8) are covered with a metallic layer (14) based on aluminum on a side facing the substrate (10).

10. Flow heater according to claim 9, **characterized in that** both sides of the fins (8) are covered with the metallic layer (14).

11. Flow heater according to claim 9 or 10, **characterized in that** the metallic layer (14) covering the fins (8) is made of an aluminum-based alloy that has a lower aluminum content than the fins (8)..

12. Flow heater according to any of claims 9 to 11, **characterized in that** the intermediate layer (13) and the metallic layer (14) covering the fins (8) are made of the same alloy.

13. Flow heater according to any one of the preceding claims, **characterized in that** the cover layer (13) of the substrate (10) has a thickness of 0.3 to 0.5 mm.

14. Flow heater according to any one of the preceding claims, **characterized in that** the base part of the housing (1) is made of an aluminum-based alloy.

15. Flow heater according to any one of the preceding claims, **characterized in that** the channel for liquid to be heated is connected to an inlet and an outlet that are arranged in the base part of the housing (1).-----
